Europäisches Patentamt

European Patent Office

Office européen des brevets

(11) Veröffentlichungsnummer: **0 562 226 B1**

## (12) EUROPÄISCHE PATENTSCHRIFT

(45) Veröffentlichungstag der Patentschrift: **05.04.95**

(51) Int. Cl.⁶: **F16D 35/02**

(21) Anmeldenummer: **93100523.5**

(22) Anmeldetag: **15.01.93**

(54) **Magnetgesteuerte Flüssigkeitsreibungskupplung.**

(30) Priorität: **24.02.92 DE 4205523**

(43) Veröffentlichungstag der Anmeldung:
**29.09.93 Patentblatt 93/39**

(45) Bekanntmachung des Hinweises auf die
Patenterteilung:
**05.04.95 Patentblatt 95/14**

(84) Benannte Vertragsstaaten:
**DE ES FR GB IT SE**

(56) Entgegenhaltungen:
**EP-A- 0 061 280**
**DE-U- 8 233 338**
**GB-A- 2 071 283**

**PATENT ABSTRACTS OF JAPAN vol. 17, no. 38 (M-1358)25. Januar 1993 & JP-A-04 258 529**

**PATENT ABSTRACTS OF JAPAN vol. 9, no. 92 (M-373)(1815) 20. April 1985 & JP-A-59 217 018**

(73) Patentinhaber: **Behr GmbH & Co.**
**Mauserstrasse 3**
**D-70469 Stuttgart (DE)**

(72) Erfinder: **Martin, Hans, Dipl.-Ing.**
**Wartbergstrasse 27**
**W-7000 Stuttgart 1 (DE)**

(74) Vertreter: **Heumann, Christian**
**Behr GmbH & Co.,**
**Patentabteilung,**
**Postfach 30 09 20**
**D-70449 Stuttgart (DE)**

## Beschreibung

Die Erfindung betrifft eine Flüssigkeitsreibungskupplung nach dem Oberbegriff des Patentanspruches 1, wie sie durch das deutsche Gebrauchsmuster 82 33 338 bekannt wurde.

Bei dieser bekannten Magnetsteuerung ist in der Vorratskammer der Flüssigkeitsreibungskupplung nur ein Ventilhebel vorgesehen, der eine Ventilöffnung steuert. Somit ist durch diese Magnetsteuerung nur eine Auf/Zu- bzw. Schwarz/Weiß-Regelung möglich, d.h. die Kupplung schaltet entweder zu oder ab. Stabile Zwischendrehzahlen der Kupplung sind mit dieser Steuerung nicht erreichbar.

Eine Lösung für stabile Zwischendrehzahlen wurde durch die EP-B 135 827 (entsprechend DE-A 33 33 268) der Anmelderin bekannt. Diese sogenannte Schrittmotorsteuerung ist jedoch durch den verwendeten Schrittmotor aufwendig.

Ferner wurde durch die DE-A 38 23 871 der Anmelderin eine weitere Flüssigkeitsreibungskupplung bekannt, die sowohl über ein Bimetall als auch über einen Magneten gesteuert wird. Auch diese Lösung ist auf Grund der Überlagerung von zwei verschiedenen Steuerungen relativ aufwendig, und die Magnetsteuerung selbst läßt ebenfalls nur eine Schwarz/Weiß-Steuerung zu.

Es ist Aufgabe der vorliegenden Erfindung, für eine gattungsgemäße Flüssigkeitsreibungskupplung eine temperaturabhängige Steuerung mit einfachen Mitteln zu schaffen, die stabile Zwischendrehzahlen zwischen der Leerlaufdrehzahl und der maximalen Drehzahl ermöglicht. Diese Aufgabe wird durch die kennzeichnenden Merkmale des Patentanspruches 1 gelöst. Erfindungsgemäß ist also vorgesehen, daß diese Kupplung mehrere Ventile mit unterschiedlichen Schließ- bzw. Rückstellkräften aufweist, die durch den außerhalb der Kupplung angeordneten Magnet nacheinander geöffnet und wieder verschlossen werden können. Dadurch wird erreicht, daß der Ölstrom aus der Vorratskammer in die Arbeitskammer mengenmäßig kontrolliert wird, so daß sich daraus unterschiedliche stabile Zwischendrehzahlen ergeben. Bei Beaufschlagung des Magneten mit einer Stromstärke der Stufe 1, wird beispielsweise nur das erste Ventil mit der geringsten Rückstellkraft geöffnet, bei Stufe 2 wird das zweite Ventil mit der nächst höheren Rückstellkraft geöffnet u. s.w. Die jeweilige Öffnungskraft des Magneten ist also immer etwas größer als die betreffende Schließ- bzw. Rückstellkraft des Ventilhebels, aber kleiner als die Schließkraft der nächst stärkeren Ventilhebel. Auf diese Art und Weise können die verschiedenen Ventile sukzessive geöffnet werden oder auch - beispielsweise bei sofortiger Einschaltung von Stufe 4 - alle vier Ventile gleichzeitig. Eine derartige Stufenregelung mit einem Magnet und mehreren Ventilen ist relativ einfach darstellbar, zumal derartige Magnete mit einer stufenförmigen Magnetkraftregelung durch stufenförmige Stromstärkenregelung handelsüblich sind.

Weitere vorteilhafte Ausgestaltungen der Erfindung sind in den Unteransprüchen 2-9 beansprucht.

Gemäß Anspruch 2 ist die Anordnung der Ventilhebel auf demselben Durchmesserbereich besonders vorteilhaft, weil sich dadurch der Magnetfluß auf diesen Durchmesserbereich konzentrieren läßt und der Magnet selbst dadurch kompakter gestaltet werden kann.

Gemäß Anspruch 3 werden die Ventilhebel entweder an der Trennwand befestigt, was eine einfache Vormontage ermöglicht, oder an der Rückwand des Kupplungsgehäuses, was je nach Bauart der Kupplung auch von Vorteil sein kann.

Gemäß Anspruch 4 sind vier oder drei Ventilhebel jeweils um 90° oder 120° versetzt, wodurch sich bei gegebenem Durchmesser eine hinreichende federnde Länge für die Ventilhebel ergibt.

Gemäß Anspruch 5 werden die unterschiedlichen elastischen Rückstellkräfte der Ventilhebel durch deren unterschiedliche Federsteifigkeiten bestimmt. Somit kann die unterschiedliche Rückstellkraft durch eine unterschiedliche Ventilhebellänge (federnde Länge) oder durch eine unterschiedliche Dicke und Breite (Widerstandsmoment) des Ventilhebels bewirkt werden. Diese unterschiedlichen Parameter, die die elastische Rückstellkraft bestimmen, ergeben sich aus der bekannten Elastizitätstheorie ($c = F/f$, wobei $c$ = Federsteifigkeit, $F$ = Kraft, $f$ = Federweg ist).

Nach Anspruch 6 sind die Ventilhebel selbst als Federn, z.B. aus elastischem Magnetstahl, ausgebildet und liegen aufgrund ihrer Vorspannung auf den Ventilöffnungen - dies ist die einfachste Bauweise. Zum Öffnen muß der Magnet unter Strom gesetzt werden, stromlos sind die Ventile also geschlossen. Durch eine Bewegungsumkehr, beispielsweise über eine Wippe, können die Ventile jedoch auch mit dieser Bauweise stromlos offen sein.

Nach Anspruch 7 können die Ventile ebenfalls stromlos geöffnet oder geschlossen sein, weil die Ventilhebel als Kipphebel mit zusätzlicher Feder ausgebildet sind, die durch unterschiedliche Anlenkung eine Bewegungsumkehr zulassen.

Nach Anspruch 8 ist auf den Ventilhebeln in dem Bereich, wo der Magnetfluß wirkt, ein ferromagnetisches Materialstück als Anker, eine sogenannte Ankerplatte, angebracht, um den Ventilhebel öffnen oder schließen zu können.

Gemäß Anspruch 9 können die Ventilöffnungen unterschiedliche Durchflußquerschnitte aufweisen, womit die Drehzahlstufen für das Zuschalten variiert werden können, beispielsweise progressive oder degressive Zuschaltung.

Gemäß Anspruch 10 sind die Ventilöffnungen auf unterschiedlichen Durchmessern, also D und kleiner, angeordnet; dadurch ergeben sich unterschiedliche Zuströmverhältnisse, da der Öldruck vom Durchmesser abhängig ist.

Ein Ausführungsbeispiel der Erfindung ist in der Zeichnung dargestellt und wird im folgenden näher beschrieben.

Fig. 1    zeigt einen schematischen Axialschnitt durch die erfindungsgemäße Flüssigkeitsreibungskupplung,

Fig. 2    zeigt einen Radialschnitt gemäß der Linie II - II in Figur 1,

Fig.2a    zeigt einen Teilschnitt gemäß der in die Ebene abgewickelten Schnittfläche A-A, und

Fig. 3    zeigt ein Diagramm für die erfindungsgemäße Kupplung mit den Zwischendrehzahlen und linearer Charakteristik, und

Fig.3a    zeigt ein abgewandeltes Diagramm mit progressiver und degressiver Charakteristik.

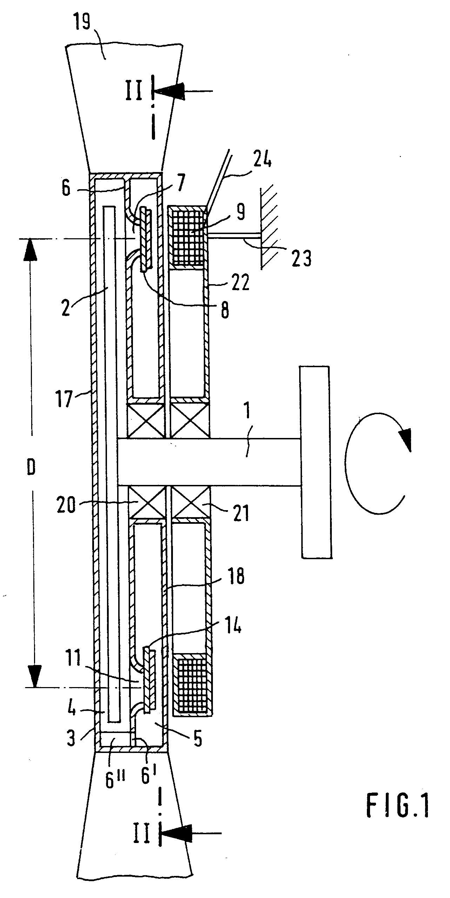

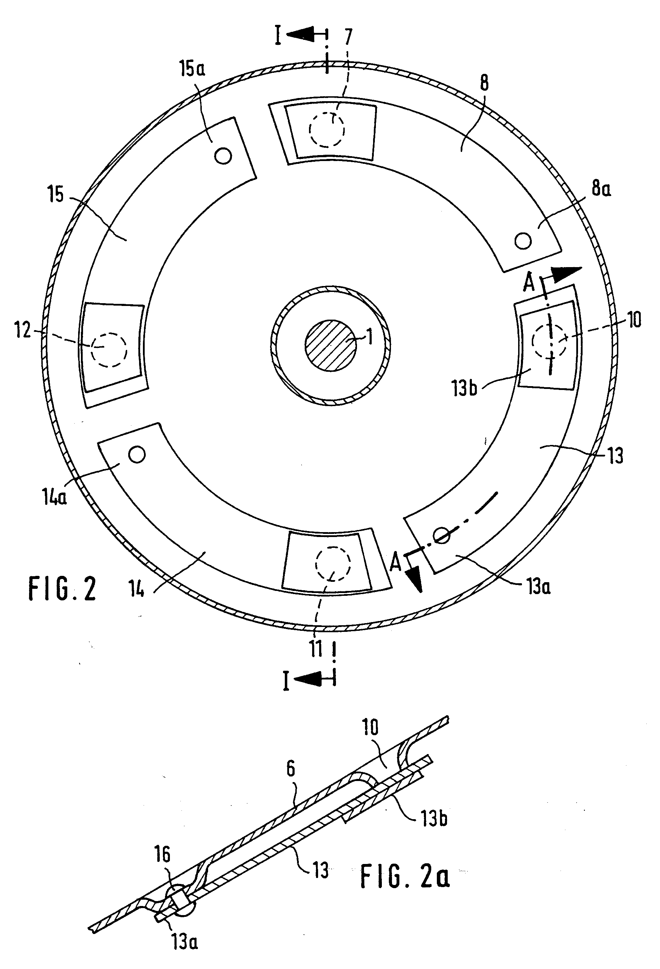

Figur 1 zeigt in schematischer Darstellung eine Flüssigkeitsreibungskupplung, bestehend aus einer Antriebswelle (1) und einer mit dieser drehfest verbundenen Antriebsscheibe (2). Letztere läuft in einer Arbeitskammer (4) des aus einer Aluminiumlegierung hergestellten Kupplungsgehäuses (3) um, welches durch eine vordere Wand (17) und eine Rückwand (18) begrenzt wird und auf seinem Außenumfang Lüfterschaufeln (19) für die Förderung von Kühlluft durch einen Kühler für eine Bennkraftmaschine aufweist. Derartige Kupplungen werden also vorzugsweise für Kraftfahrzeuge bei der Motorkühlung eingesetzt. Im Inneren des Kupplungsgehäuses (3) ist eine Trennwand (6) angeordnet, die von der Arbeitskammer (4) eine Vorratskammer (5) abteilt. In der Arbeitskammer (4) und/oder in der Vorratskammer (5) befindet sich ein viskoses Fluid, vorzugsweise Silikonöl, welches in bekannter Weise zwischen Vorratskammer und Arbeitskammer zirkuliert. Erfindungsgemäß sind in der Trennwand (6) Ventilöffnungen (7,10,11,12,) vorgesehen, die durch die ihnen zugeordneten Ventilhebel (8,13,14,15) kontrolliert werden. Die Ventilhebel sind bei diesem Ausführungsbeispiel an ihrem einen Ende (8a,13a,14a,15a) an der Trennwand (6) befestigt, und zwar - wie Figur 2a zeigt - mittels eines Niets (16). Die Ventilhebel (8,13,14,15) sind aus einem elastischen Werkstoff hergestellt und wirken wie Blattfedern, d.h. sie verschließen auf Grund ihrer elastischen Rückstellkraft die jeweiligen Ventilöffnungen (7,10,11,12). Eine weitere Öffnung (6') ist im radial äußersten Bereich der Arbeits- und Vorratskammer in der Trennwand (6) angeordnet, verbunden mit einem Staukörper (6''), durch welchen das Silikonöl bei laufender Antriebsscheibe (2) ständig von der Arbeitskammer (4) in die Vorratskammer (5) gepumpt wird. Das Kupplungsgehäuse (3) ist über ein Kugellager (20) in bekannter Weise auf bzw. gegenüber der Antriebswelle (1) gelagert, über welche die Kupplung in der Regel vom Motor oder über eine Keilriemenscheibe angetrieben wird. Außerhalb des Kupplungsgehäuses (3) ist ein Ringmagnet (9) angeordnet, der über eine Strebe (23) gegenüber dem Motorgehäuse abgestützt und andererseits über ein Lager (21) auf der Antriebswelle (1) gelagert ist. Der feststehende Magnet (9) kann bezüglich seiner Magnetkraft stufenförmig geregelt werden, indem er mit unterschiedlichen Stromstärken beaufschlagt und über die elektrischen Leitungen (24) angesteuert wird. Der von dem Ringmagnet (9) erzeugte Magnetfluß durchsetzt die Rückwand (18) des Kupplungsgehäuses (3) und beaufschlagt die Ventilhebel (8,13,14,15), die ihrerseits als Magnetanker ausgebildet sind, d.h. eine aus einem ferromagnetischen Werkstoff gebildete Ankerplatte (13b) tragen, so daß sie bei Beaufschlagung durch den Magnetfluß des Ringmagneten (9) entgegen ihrer elastischen Rückstellkraft von den Ventilöffnungen (7,10,11,12) in der Trennwand (6) abgehoben werden. Erfindungsgemäß sind nun die einzelnen Ventilhebel (8,13,14,15) mit einer unterschiedlich elastischen Rückstellkraft ausgestattet, mit der diese Ventilhebel die jeweilige Ventilöffnung verschließen. Bewirkt werden diese unterschiedlichen Ventilschließkräfte durch eine unterschiedliche Auslegung der Ventilhebel hinsichtlich ihrer Federsteifigkeit, d.h. ihrer Ventilhebellänge oder ihrer Ventilhebeldicke bzw. ihres Widerstandsmomentes - letzteres ist aus der Zeichnung nicht entnehmbar, da dort alle Ventilhebel figürlich gleich erscheinen - sie sind jedoch, was ihre Funktion angeht, unterschiedlich vorgespannt. Angepaßt an diese unterschiedlichen Ventilschließkräfte ist der Ringmagnet (9), der auch über entsprechende Magnetstufen verfügt, mittels derer die einzelnen Ventilhebel nacheinander oder gleichzeitig angezogen werden können, so daß ein oder mehrere Ventilöffnungen nacheinander oder gleichzeitig geöffnet werden. Somit kann je nach Kühlbedarf sukzessive ein größerer Ventilquerschnitt freigegeben werden, so daß sukzessive mehr Öl aus der Vorratskammer (5) in die Arbeitskammer (4) strömt, damit die Drehzahl des Kupplungsgehäuses (3) erhöht wird und sich auf stabile Werte einstellt.

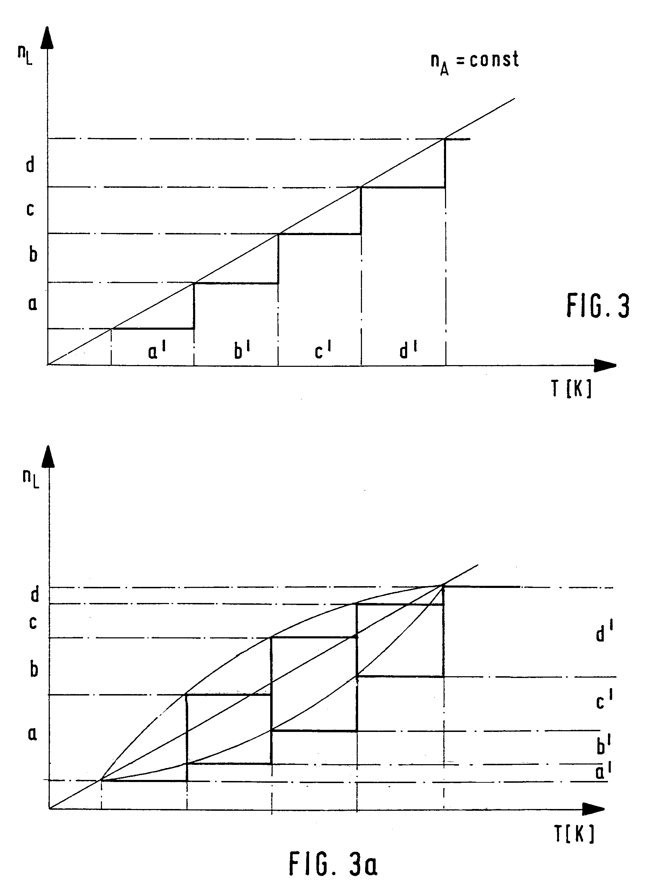

In dem Diagramm in Figur 3 ist dies dargestellt: dort ist die Abtriebsdrehzahl $n_L$, d.h. die Lüfterdrehzahl des Kupplungsgehäuses (3), aufgetragen über der Temperatur T in Grad Kelvin, d.h. beispielsweise der Temperatur des Kühlmittels, mit dem die Brennkraftmaschine eines Kraftfahrzeuges gekühlt wird. Bei einer vergleichsweise niedrigen Temperatur T ist also nur eine niedrige Lüfterdrehzahl auf der Stufe a erforderlich. Diese Stufe wird erreicht, indem sämtliche Ventilöffnungen in der Trennwand geschlossen sind, d.h. der Magnet (9) ist stromlos. Soll bei einem erhöhten Kühlbedarf die Drehzahl auf die Stufe b ansteigen, so wird eine erste Ventilöffnung, beispielsweise die Ventilöffnung (7) mittels des Ventilhebels (8) geöffnet, indem der Magnet (9) mit Stufe 1 beaufschlagt wird, d.h. mit der geringsten Stromstärke, die dann den Ventilhebel (8) mit der geringsten Rückstellkraft abhebt. Entsprechend können bei weiter steigendem Kühlbedarf die Stufen c, d und e in der Lüfterdrehzahl zugeschaltet werden, indem die weiteren Ventilhebel (13,14,15) durch Einschaltung der Magnetstufen 2,3,4 angezogen und somit die Ventilöffnungen (10,11,12) freigegeben werden. Bei abnehmendem Kühlbedarf, d.h. sinkender Kühlmitteltemperatur, kann die Lüfterdrehzahl analog stufenweise wieder heruntergefahren werden.

Die Höhe der Stufen a, b, c, d in Fig. 3 ist konstant, ebenso sind die Temperaturabstände a', b', c', d' konstant - dadurch ergibt sich eine lineare Drehzahlcharakteristik.

Wie in Fig. 3a dargestellt, können die Stufen mit steigender Temperatur aber auch zunehmen (a', b', c', d') oder abnehmen (a, b, c, d) - dann ergibt sich eine progressive oder degressive Drehzahlcharakteristik. Die Variation der Stufen läßt sich durch unterschiedliche Querschnitte der Ventilöffnungen oder durch Anordnung der Ventilöffnungen auf unterschiedlichen Durchmessern erreichen.

Für den Kühlbedarf der Brennkraftmaschine eines Kraftfahrzeuges ist eine derartige Stufenregelung ausreichend und bietet den Vorteil, daß eine aufwendige stufenlose Drehzahlregelung entfallen kann. Im übrigen kann mit dieser Lüfterregelung auch die Kühlung der Ladeluft oder des Retarderöles unabhängig gesteuert werden.

Obwohl bei dem oben beschriebenen Ausführungsbeispiel von einer Antriebswelle und einer Antriebsscheibe gesprochen wird, kann die Antriebsrichtung auch umgekehrt werden, d.h. der Antrieb würde über das Kupplungsgehäuse und der Abtrieb über die Welle erfolgen.

**Patentansprüche**

1. Flüssigkeitsreibungskupplung mit einer Antriebsscheibe (2) und einer Antriebswelle (1) und einem auf der Antriebswelle (1) drehbar gelagerten Kupplungsgehäuse (3), bestehend aus einer Arbeitskammer (4) und einer Vorratskammer (5), die durch eine Trennwand (6) voneinander abgeteilt sind, wobei in der Trennwand (6) eine Ventilöffnung (7) angeordnet und dieser ein Ventilhebel (8) zugeordnet ist, der durch einen außerhalb des Kupplungsgehäuses (3) angeordneten Magneten (9) gesteuert wird, **dadurch gekennzeichnet**, daß in der Trennwand (6) weitere Ventilöffnungen (10,11,12) auf dem Umfang verteilt angeordnet sind, denen jeweils ein Ventilhebel (13,14,15) zugeordnet ist, wobei die Ventilhebel (8,13,14,15) jeweils unterschiedliche, gestufte elastische Rückstellkräfte aufweisen, und daß der Magnet (9) stufenweise in seiner Magnetkraft steuerbar und jeweils an die Rückstellkräfte angepaßt ist.

2. Flüssigkeitsreibungskupplung nach Anspruch 1, **dadurch gekennzeichnet**, daß die Ventilhebel (8,13,14,15) als Kreisringsektoren ausgebildet und, in Umfangsrichtung versetzt, auf demselben Durchmesserbereich angeordnet sind.

3. Flüssigkeitsreibungskupplung nach Anspruch 1 oder 2, **dadurch gekennzeichnet**, daß die Ventilhebel (8,13,14,15) mit einem Ende (8a,13a,14a,15a) an der Rückwand (18) des Kupplungsgehäuses (3) oder der Trennwand (6) befestigt sind.

4. Flüssigkeitsreibungskupplung nach Anspruch 1,2 oder 3, **dadurch gekennzeichnet**, daß vier bzw. drei Ventilöffnungen (7,10,11,12) und vier bzw. drei Ventilhebel (8,13,14,15), um je 90° bzw. 120° in Umfangsrichtung versetzt, vorgesehen sind.

5. Flüssigkeitsreibungskupplung nach einem der Ansprüche 1-4, **dadurch gekennzeichnet**, daß die unterschiedlichen Rückstellkräfte durch die Federsteifigkeit der einzelnen Ventilhebel (8,13,14,15) bestimmt werden.

6. Flüssigkeitsreibungskupplung nach einem der Ansprüche 1-5, **dadurch gekennzeichnet**, daß die Ventilhebel (8,13,14,15) als einseitig eingespannte Blattfedern ausgebildet sind.

7. Flüssigkeitsreibungskupplung nach einem der Ansprüche 1-5, **dadurch gekennzeichnet**, daß die Ventilhebel als Kipphebel mit einer zusätzlichen Feder ausgebildet sind.

8. Flüssigkeitsreibungskupplung nach einem der Ansprüche 1-7, **dadurch gekennzeichnet**, daß die Ventilhebel (13) eine Ankerplatte (13b) tragen.

9. Flüssigkeitsreibungskupplung nach einem der Ansprüche 1-8, **dadurch gekennzeichnet,** daß die Ventilöffnungen (7,10,11,12) unterschiedlichen Durchmesser bzw. Querschnitt aufweisen.

10. Flüssigkeitsreibungskupplung nach einem der Ansprüche 1-9, **dadurch gekennzeichnet**, daß die Ventilöffnungen auf unterschiedlichen Durchmessern angeordnet sind.

## Claims

1. Hydraulic friction clutch with a driving disc (2) and a driving shaft (1) and a clutch housing (3) mounted in a rotatable manner on the drive shaft (1), consisting of an operating chamber (4) and a storage chamber (5), which are separated from one another by a separating wall (6), wherein, in the separating wall (6), there is disposed a valve aperture (7) and a valve lever (8) is associated therewith, which valve lever is controlled by a magnet (9) located outside the gear housing (3), characterised in that further valve apertures (10, 11, 12) are arranged in the separating wall (6), distributed over the periphery thereof, with which a valve lever (13, 14, 15) is associated in each case, wherein the valve levers (8, 13, 14, 15) comprise, in each case, different stepped resilient resetting forces, and in that the magnetic force of the magnet (9) may be controlled in a step-like manner and is adapted to the resetting forces in each case.

2. Hydraulic friction clutch according to Claim 1, characterised in that the valve levers (8, 13, 14, 15) are formed as circular sectors, and offset in the peripheral direction, are disposed on the same area of the diameter.

3. Hydraulic friction clutch according to Claim 1 or Claim 2, characterised in that the valve levers (8, 13, 14, 15) are secured at one end (8a, 13a, 14a, 15a) to the rear wall (18) of the gear housing (3) on the separating wall (6).

4. Hydraulic friction clutch according to Claim 1, 2 or 3, characterised in that four or three valve apertures (7, 10, 11, 12) and four or three valve levers (8, 13, 14, 15), offset by 90° or 120° in the peripheral direction in each case, are provided.

5. Hydraulic friction clutch according to one of Claims 1 to 4, characterised in that the differing resetting forces are determined by the resilient rigidity of the individual valve levers (8, 13, 14, 15).

6. Hydraulic friction clutch according to any one of Claims 1 to 5, characterised in that the valve levers (8, 13, 14, 15) are formed as blade springs which are clamped at one side.

7. Hydraulic friction clutch according to any one of Claims 1 to 5, characterised in that the valve levers are formed as a rocker arm with an additional spring.

8. Hydraulic friction clutch according to any one of Claims 1 to 7, characterised in that the valve levers (13) support an anchor plate (13b).

9. Hydraulic friction clutch according to any one of Claims 1 to 8, characterized in that the valve apertures (7, 10, 11, 12) have different diameters or cross-sections.

10. Hydraulic friction clutch according to any one of Claims 1 to 9, characterised in that the valve apertures are arranged on different diameters.

## Revendications

1. Embrayage à friction à liquide, avec un disque d'entraînement (2) et un arbre d'entraînement (1) et un carter d'embrayage (3), monté à rotation sur l'arbre d'entraînement (1), et composé d'une chambre de travail (4) et d'une chambre de stockage (5), subdivisées l'une par rapport à l'autre au moyen d'une paroi de séparation (6), une ouverture de soupape (7) étant ménagée dans la paroi de séparation (6) et un levier à soupape (8) étant associé à cette ouverture à soupape et commandé au moyen d'un aimant (9) disposé à l'extérieur du carter d'embrayage (3), caractérisé en ce que dans la paroi de séparation (6) sont disposées d'autres ouvertures à soupape (10, 11, 12), réparties sur la périphérie, à chacune desquelles est associé un levier à soupape (13, 14, 15), les leviers à soupape (8, 13, 14, 15) présentant chacun des efforts de rappel élastique différents, étagés, et en ce que la force magnétique de l'aimant (9) peut être commandée et adaptée aux efforts de rappel respectifs.

2. Embrayage à friction à liquide selon la revendication 1, caractérisé en ce que les leviers à soupape (8, 13, 14, 15) sont' réalisés sous forme de secteurs d'anneau de cercle, décalés en direction périphérique, disposés sur la même plage de diamètre.

3. Embrayage à friction à liquide selon la revendication 1 ou 2, caractérisé en ce que les leviers à soupape (8, 13, 14, 15) sont fixés par une extrémité (8a, 13a, 14a, 15a) à la paroi arrière (18) du carter d'embrayage (3) ou de la paroi de séparation (6).

4. Embrayage à friction à liquide selon la revendication 1, 2 ou 3, caractérisé en ce que quatre, respectivement trois, ouvertures à soupape (7, 10, 11, 12) et quatre, respectivement trois, leviers à soupape (8, 13, 14, 15) sont prévus, décalés chacun de 90°, respectivement 120°, en direction périphérique.

5. Embrayage à friction à liquide selon l'une des revendications 1 à 4, caractérisé en ce que la force de rappel, de valeur individuellement différente, est déterminée par la rigidité d'élasticité des différents leviers à ressort (8, 13, 14, 15).

6. Embrayage à friction à liquide selon l'une des revendications 1 à 5, caractérisé en ce que les leviers à soupape (8, 13, 14, 15) sont réalisés sous forme de ressorts à lame encastrés serrés à une extrémité.

7. Embrayage à friction à liquide selon l'une des revendications 1 à 5, caractérisé en ce que les leviers à soupape sont réalisés sous forme de leviers basculants avec un ressort supplémentaire.

8. Embrayage à friction à liquide selon l'une des revendications 1 à 7, caractérisé en ce que les leviers à soupape (13) portent une plaque d'induit (13b).

9. Embrayage à friction à liquide selon l'une des revendications 1 à 8, caractérisé en ce que les ouvertures à soupape (7, 10, 11, 12) présentent un diamètre, respectivement une section transversale, différent(e).

10. Embrayage à friction à liquide selon l'une des revendications 1 à 9, caractérisé en ce que les ouvertures à soupape sont disposées sur des diamètres différents.

FIG.1

7

FIG. 2

FIG. 2a

FIG. 3

FIG. 3a